# EUROPÄISCHE PATENTSCHRIFT

(11) **EP 0 611 252 B1**
(45) Veröffentlichungstag und Bekanntmachung des Hinweises auf die Patenterteilung: **17.04.1996**
(21) Anmeldenummer: 94810052.4
(22) Anmeldetag: 01.02.1994
(51) Int. Cl.: C09B 67/08, C09D 7/00, C09D 11/02, C08K 5/00

(54) **Mit Silanen beschichtete organische Pigmente**
Organic pigments coated with silanes
Pigments organiques revêtus de silanes

(30) Priorität: 09.02.1993 CH 383/93
(43) Veröffentlichungstag der Anmeldung: 17.08.1994
(73) Patentinhaber: CIBA-GEIGY AG, CH-4002 Basel (CH)
(72) Erfinder: Bugnon, Philippe, Dr., CH-1724 Essert (CH); Allaz, Jean, CH-1732 Arconciel (CH)

(56) Entgegenhaltungen:
- EP-A- 0 296 111
- EP-A- 0 466 646

## Beschreibung

Die vorliegende Erfindung betrifft organische Pigmente, deren Teilchenoberfläche mit einem festhaftenden, über eine hydroxylgruppenhaltige Zwischenschicht fixierten Ueberzug aus Silanen versehen ist. Sie zeichnen sich durch hervorragende Eigenschaften, insbesondere durch ein sehr gutes rheologisches Verhalten der damit hergestellten Lackanreibungen, aus.

Die Beschichtung der Teilchenoberfläche von Pigmenten zur Erzielung besserer Eigenschaften ist allgemein bekannt und beispielsweise in den US-Patenten 3 370 971, 3 470 007 und 3 639 133 beschrieben. Es handelt sich dabei um die Beschichtung der Teilchenoberfläche von anorganischen Pigmenten, insbesondere Bleichromaten, mit Siliciumoxid, gegebenenfalls in Kombination mit Aluminiumoxid. Wie aus den japanischen Offenlegungsschriften 75/51527 und 79/160433 hervorgeht, wurden auch organische Pigmente mit Siliciumoxid beschichtet und aus der niederländischen Patentanmeldung 72/7051 sind organische Pigmente mit einem Ueberzug aus Siliciumoxid und wasserlöslichen Metallsalzen von z.B. Sn⁴⁺, Ti⁴⁺ oder Zr⁴⁺ bekannt. Die damit erzielten Resultate sind allerdings nicht immer befriedigend, denn insbesondere in Lösungsmittelsystemen, wie z.B. Lacken, werden diese Beschichtungen leicht abgelöst.

Aus EP-A-57 388 und US-Patent 4 139 660 ist bekannt, dass man die Oberflächenspannung und damit die Benetzbarkeit von festen Substraten durch Behandlung mit metallorganischen Verbindungen oder Salzen von Elementen der IV. Haupt- oder Nebengruppe des Periodensystems verbessern kann. Im US-Patent 4 139 660 wird ausdrücklich darauf hingewiesen, dass dabei keine Hydrolyse stattfinden soll. Das US-Patent 4 107 133 beschreibt eine Farbstoffzusammensetzung für Polyethylen, die aus eine organische Silanverbindung und/oder eine organische Titanverbindung enthaltenden organischen Pigmenten besteht. Aus dem US-Patent 3 025 173 ist ein Verfahren zum Ueberziehen von Pigmentpartikeln mit Titanhydrat bekannt. Aber auch die nach diesen Methoden erhaltenen Pigmentzusammensetzungen vermögen z.B. in Lacken, insbesondere in "High Solid"-Systemen mit Zusätzen von "Hyperdispersants" (vgl. J.S. Hampton, J.F. Mac Millan, American Ink Maker, Jan. 1985, S. 16 ff), die heute vermehrt zum Einsatz kommen, nicht ganz zu befriedigen. Im US-Patent 4 880 472 wird aber erklärt, dass gerade die bis dahin unerwünschte Hydrolyse nötig sei, um dieses Problem zu lösen und dass organische Pigmente mit einem festhaftenden Ueberzug aus Silicium- oder Aluminiumoxid erhalten werden können, wenn der genannte Ueberzug über eine hydroxylgruppenhaltige Zwischenschicht aus partiell hydrolysierten Chelaten oder Alkylestern der Säuren von Elementen der Gruppen 4A oder 4B des Periodensystems an die Teilchenoberfläche des Pigments fixiert wird. Die obenerwähnten, den bis dahin bekannten Pigmentzusammensetzungen dieser Art anhaftenden Nachteile würden dadurch beseitigt.

Es wurde nun gefunden, dass bei gleicher Verfahrensweise, aber durch Ersatz des Silicium- oder Aluminiumoxidüberzugs mit einem Silanüberzug, überraschend bessere Resultate erzielt werden können.

Bei den üblicherweise als Silane bezeichneten Alkylestern der Kieselsäure, die erfindungsgemäss zur Verwendung kommen, handelt es sich um allgemein bekannte Produkte. Sie werden z.B. in Dynamit Nobel's Technische Information über ihre DYNASYLAN®-Produkte ausführlich als Haftvermittler beschrieben. In verschiedenen Publikationen werden sie auch im Zusammenhang mit organischen Pigmenten gebracht, allerdings stets in anderer Form und mit anderen Zwecken, als in der vorliegenden Erfindung.

Aus EP-A 103 986, EP-A 140 620 und EP-A 140 688 ist es z.B. bekannt Silanreste durch chemische Bindung in Antrachinon- beziehungsweise Perylenfarbstoffmoleküle einzuführen um die Farbstoffe in Pigmente umzuwandeln, die besonders befähigt sind auf anorganischen Substraten zur Bildung von sogenannten "composite pigments" aufgepfropft zu werden. Gemäss H. Giesche & E. Matijevic, Dyes and Pigments 17 (1991) 323-340, können Säurefarbstoffe durch Behandlung mit einer Suspension von Siliciumoxid und Aminosilanen ebenfalls in Pigmente mit bestimmter Partikelgrösse umgewandelt werden. Aus der japanischen Offenlegungsschrift 76/74039 ist es bekannt organische Pigmente mit Silan und Wasserglas zu beschichten, um ihre Eignung zum Pigmentieren von Polyolefinen zu verbessern.

Aus EP-A 466 646 sind organische Pigmente bekannt, deren Teilchenoberfläche mit einer Silanschicht beschichtet ist, welche im wesentlichen aus einem hydrolysierten γ-Methacryl-oxyalkyl-trialkoxysilan besteht, die ihrerseits auf einer die Teilchenoberfläche des Pigments umhüllenden Schicht aus hydrolysiertem Zirkonacetylacetonat adsorbiert ist, und darüber hinaus noch mit einer Acrylpolymerschicht umhüllt ist. Solche Pigmente eignen sich ausgezeichnet für das verzugsfreie Pigmentieren von Polyolefinen.

Die vorliegende Erfindung betrifft demnach Stoffzusammensetzungen enthaltend
a) ein hochmolekulares organisches Material in Form eines Lackes oder einer Druckfarbe.
b) eine Pigmentzusammensetzung bestehend aus einem organischen Pigment dessen Teilchenoberfläche mit einem festhaftenden Überzug aus Kieselsäurealkylester versehen ist, welcher durch Adsorption eines Kieselsäurealkylesters auf einer die Teilchenoberfläche umhüllenden Schicht fixiert wird, die im wesentlichen aus partiell hydrolysierten organischen Verbindungen von Elementen der Gruppe 4A oder 4B des Periodensystems¹, ausgewählt aus der Gruppe bestehend aus Chelaten der Formel 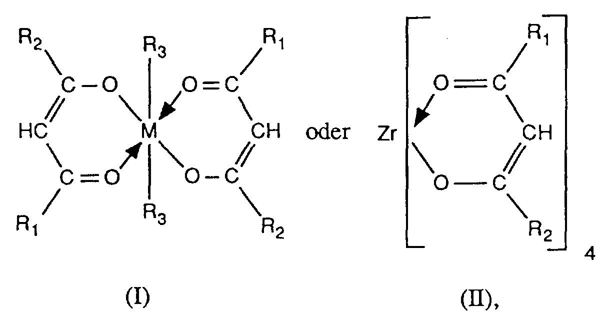 worin R₁ Methyl, Ethyl, Methoxy oder Ethoxy, R₂ Methyl oder Ethyl und R₃ Halogen oder C₁-C₄-Alkoxy sind und M Ti oder Sn bedeutet, und aus Estern der Formel

   M₁(OR₄)₄ (III),

   worin M₁ ein Element der Gruppe 4A oder 4B des Periodensystems und R₄ C₁-C₄-Alkyl bedeuten, besteht, wobei der Kieselsäurealkylester vor, während oder nach der Adsorption hydrolysiert wird.

¹ Grant & Hackh's Chemical Dictionary, fifth edition, 1987

R₁ ist bevorzugt Methyl oder Ethoxy und R₂ ist vorzugsweise Methyl.

R₃ bedeutet als Halogen z.B. Brom, Jod und insbesondere Chlor.

Als C₁-C₄-Alkoxy bedeutet R₃ z.B. Methoxy, Ethoxy, n-Propoxy, Isopropoxy, n-Butoxy, sec.-Butoxy oder tert.-Butoxy.

In Formel I bedeutet R₃, wenn M Ti ist, bevorzugt C₁-C₄-Alkoxy, insbesondere Isopropoxy.

In Formel I bedeutet R₃, wenn M Sn ist, bevorzugt Halogen, insbesondere Chlor.

R₄ bedeutet als C₁-C₄-Alkyl z.B. Methyl, Ethyl, n-Propyl, Isopropyl, n-Butyl, sec.-Butyl oder tert.-Butyl und ist bevorzugt Ethyl, n-Propyl, Isopropyl oder n-Butyl.

M₁ ist beispielsweise Sn, Si, Pb, Ge, Ti oder Zr, Bevorzugt ist M₁ Si, Ti oder Zr.

Verbindungen der Formel II sind bevorzugt.

Von besonderem Interesse sind erfindungsgemässe Stoffzusammensetzungen, bei denen ein Kieselsäurealkylester der Formel 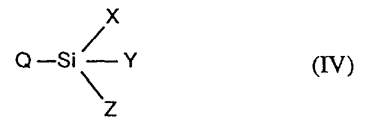 verwendet wird, worin
X OR oder Cl, Y und Z, unabhängig voneinander, OR, Cl oder Methyl und R Methyl oder Ethyl bedeuten und Q eine Gruppe

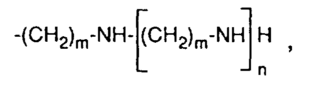

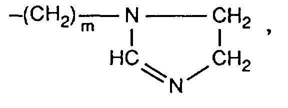

-(CH₂)ₘ-SH,

-(CH₂)ₘ-Cl ,

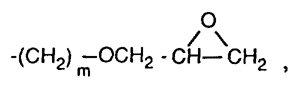

-(CH₂)ₘ-OCO-C(CH₃)=CH₂ ,

-CH=CH₂ ,

-(CH₂)ₘ-N(CH₃)₂ ,

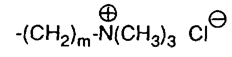

oder

-(CH₂)ₚ-CH₃

ist, worin m eine Zahl von 1 bis 6, n die Zahlen Null, 1 oder 2 und p eine Zahl von 6 bis 20 bedeuten und insbesondere diejenigen, bei denen ein Kieselsäurealkylester der Formel 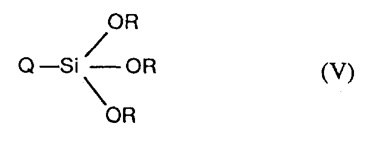 verwendet wird, worin R Methyl oder Ethyl ist und Q eine Gruppe

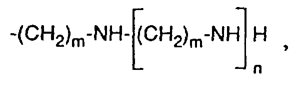

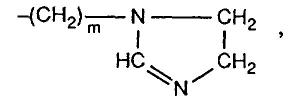

-(CH₂)ₘ-N(CH₃)₂

oder 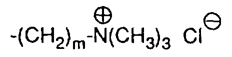 bedeutet, m eine Zahl von 1 bis 3 ist und n Null, 1 oder 2 bedeutet.

Besonders zweckmässig sind Kieselsäurealkylester der Formel V der oben angegebenen Bedeutung, worin m die Zahl 3 bedeutet.

Alle üblichen organischen Pigmente, wie beispielsweise Chinophthalone, Indanthrone, Flavanthrone, Pyranthrone, Anthrachinone, Perylene, Dioxazine, Perinone, Thioindigo, Metallkomplexe und insbesondere Diketopyrrolopyrrole, Azopigmente, Chinacridone, Phthalocyanine, Isoindoline und Isoindolinone, eignen sich zur Herstellung der erfindungsgemässen Stoffzusammensetzungen. Diketopyrrolopyrrole sind bevorzugt.

Die Herstellung der Pigmentzusammensetzung (b) der erfindungsgemässen Stoffzusammensetzung erfolgt beispielsweise wie nachstehend beschrieben.

Das organische Pigment wird nach üblichen Methoden in Wasser oder einem Niederalkylalkohol (z.B. Methyl-, Ethyl-, n-Propyl-, Isopropyl-, n-Butyl-, sec.-Butyl, tert.-Butyl- oder Amylalkohol) dispergiert. Dieser Suspension fügt man zweckmässig 1-15, bevorzugt 2-7 Gew.-%, bezogen auf das Pigment, einer Verbindung der Formel I, II oder III, jeweils als Oxid berechnet, in Pulverform oder als Lösung zu.

Das Gemisch wird im allgemeinen mindestens eine Stunde bei Temperaturen zwischen 20 und 80°C gerührt. Der pH liegt je nach eingesetztem Reagenz zwischen 2 und 6. Durch Zugabe einer Base wird der pH auf 7 bis 9 erhöht und damit die partielle Hydrolyse eingeleitet. Als Basen kommen zweckmässig anorganische sowie organische Verbindungen, z.B. Natronlauge, Kalilauge, Ammoniak, Natriumalkoholat, Kaliumalkoholat Natriumsilikat, Natriumaluminat oder Pyridin in Frage. Die Hydrolyse kann auch durch Erhöhung der Temperatur eingeleitet werden. Danach wird bei einer Temperatur zwischen 50 und 80°C weitergerührt, wobei der pH allmählich absinkt. Sobald der pH stabil ist (je nach Temperatur und Reagenzien 1-20 Stunden), wird die so erhaltene Suspension abgekühlt und in dieser Form mit dem Kieselsäurealkylester umgesetzt (A) oder filtriert, mit Wasser gewaschen, getrocknet und dann in fester Form mit dem Kieselsäurealkylester behandelt (B).

Verfährt man nach Methode (A), so wird die Suspension unter Rühren auf 60-100°C erhitzt und mit 0,5-50, bevorzugt 1-25 und besonders bevorzugt 2-12 Gew.%, bezogen auf das Pigment, Kieselsäurealkylester versetzt. Es wird 2 bis 6 Stunden weitergerührt und abfiltriert. Der Rückstand wird im Wasser gewaschen und im Vakuumtrockenschrank bei 80-120°C getrocknet.

Verfährt man nach Methode (B), so wird das obenerwähnte Produkt in fester Form mit der wie oben angegebenen erforderlichen Menge Kieselsäurealkylester beispielsweise in einem Rotationsverdampfer vermischt und 2 bis 6 Stunden bei einer Temperatur zwischen 150 und 250°C gerührt. Danach wird das Produkt zweckmässig zuerst mit einem hydrophoben, dann mit einem hydrophilen organischen Lösungsmittel und schliesslich mit Wasser gewaschen und im Vakuumtrockenschrank bei 80-120°C getrocknet.

Es ist aber auch möglich den Kieselsäurealkylester in der wie oben angegeben erforderlichen Menge separat vor, während oder nach der Zugabe des mit dem partiell hydrolysierten Chelat oder Ester der Formel I, II oder III beschichteten Pigments bei der Einarbeitung in das hochmolekulare organische Material zuzugeben.

Hochmolekulare organische Materialien, die in Form eines Lackes oder einer Druckfarbe als Komponente (a) der erfindungsgemässen Stoffzusammensetzungen in Frage kommen, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie insbesondere Harnstoff- und Melamin-Formaldehydharze, Alkydharze, Phenoplaste, Polycarbonate, Polyurethane, Polyester, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Je nach Verwendungszweck erweist es sich als vorteilhaft, die Pigmentzusammensetzungen (b) als Toner oder in Form von Präparaten einzusetzen. Bezogen auf das zu pigmentierende hochmolekulare organische Material kann man die Pigmentzusammensetzungen (b) in einer Menge von 0,01 bis 30 Gew.%, vorzugsweise von 0,1 bis 10 Gew.%, einsetzen.

Zum Pigmentieren von Lacken und Druckfarben werden die hochmolekularen organischen Materialien und die Pigmentzusammensetzungen (b) gegebenenfalls zusammen mit Zusatzstoffen,wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen zeichnen sich durch gute allgemeine Eigenschaften, wie z.B. hohe Transparenz, gute Ueberlackier-, Migrations-, Hitze-, Licht- und Wetterbeständigkeit, aus.

Die Pigmentzusammensetzungen (b) zeichnen sich aber ganz besonders durch ein hervorragendes rheologisches Verhalten in Lack- und Druckfarbensystemen sowie durch hohen Glanz und ausgezeichnetes "DOI" (= distinctness of image) der damit erhaltenen Lackierungen.

Infolge der guten rheologischen Eigenschaften der Pigmentzusammensetzungen (b) ist es möglich, Lacke hoher Pigmentkonzentration (high loadings) herzustellen.

Die Pigmentzusammensetzungen (b) eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Pigmentzusammensetzungen (b), die Kieselsäurealkylester der Formel IV enthalten, worin Q nicht eine Gruppe -(CH₂)ₘ-OCO-C(CH₃)=CH₂ bedeutet, sowie ihre Verwendung in thermoplastischen und thermohärtbaren Kunststoffen ausgewählt aus der Gruppe bestehend aus Harnstoff- und Melamin-Formaldehydharzen, Alkydharzen, Phenoplasten, Polycarbonaten, Polyolefinen, Polystyrol, Polyvinylchlorid, Polyamiden, Polyurethanen, Polyestern, Gummi, Casein, Silikon und Silikonharzen, einzeln oder in Mischungen, worin sie sich durch diesselben guten Eigenschaften, wie oben beschrieben, auszeichnen, sind neu und stellen einen weiteren Gegenstand der vorliegenden Erfindung dar.

Die Erfindung betrifft demnach auch Pigmentzusammensetzungen enthaltend ein mit einem Kieselsäurealkylester beschichtetes organisches Pigment, dadurch gekennzeichnet, dass die Teilchenoberfläche des Pigments mit einem festhaftenden Überzug aus Kieselsäurealkylester versehen ist, welcher durch Adsorption eines Kieselsäurealkylesters der Formel 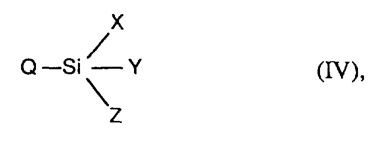 worin
X OR oder Cl, Y und Z, unabhängig voneinander, OR, Cl oder Methyl und R Methyl oder Ethyl bedeuten und Q eine Gruppe

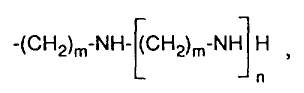

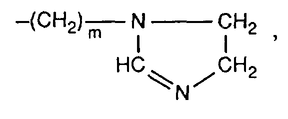

-(CH₂)ₘ-SH,

-(CH₂)ₘ-Cl ,

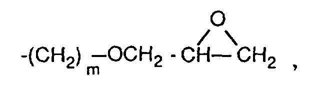

-CH=CH₂ ,

-(CH₂)ₘ-N(CH₃)₂ ,

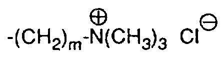

oder

-(CH₂)ₚ-CH₃

ist, worin m eine Zahl von 1 bis 6, n die Zahlen Null, 1 oder 2 und p eine Zahl von 6 bis 20 bedeuten,
auf einer die Teilchenoberfläche umhüllenden Schicht fixiert wird, die im wesentlichen aus partiell hydrolysierten organischen Verbindungen von Elementen der Gruppe 4A oder 4B des Periodensystems, ausgewählt aus der Gruppe bestehend aus Chelaten der Formel 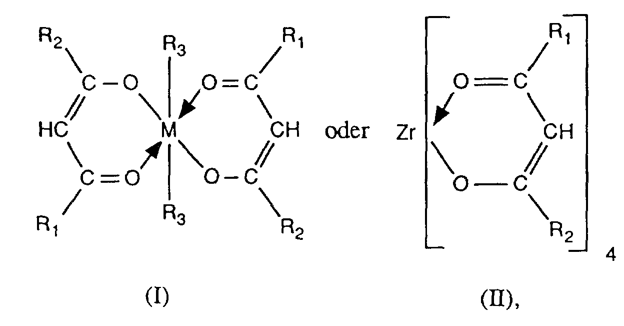 worin R₁ Methyl, Ethyl, Methoxy oder Ethoxy, R₂ Methyl oder Ethyl und R₃ Halogen oder C₁-C₄-Alkoxy sind und M Ti oder Sn bedeutet, und aus Estern der Formel

M₁(OR₄)₄ (III),

worin M₁ ein Element der Gruppe 4A oder 4B des Periodensystems und R₄ C₁-C₄-Alkyl bedeuten, besteht, wobei das Kieselsäurealkylester vor, während oder nach der Adsorption hydrolysiert wird.

Die nachfolgenden Beispiele dienen zur Erläuterung der Erfindung. Sofern nichts anderes vermerkt, bedeuten Prozente Gewichtsprozente.

Beispiel 1:
a) 326 g eines 36,8 %igen feuchten Presskuchens des Diketopyrrolopyrrolpigments C.I. Pigment Rot 255 werden in 860 ml Wasser mit 14,4 g Zirkonium-IV-acetylacetonat (= 3 % ZrO₂, bezogen auf das Pigment) während 18 Stunden dispergiert. Die Suspension wird auf 75°C erwärmt und durch Zugabe von 2N NaOH wird der pH auf 8,5 erhöht. Die Suspension wird 4 Stunden gerührt, wobei der pH allmählich auf 5,8 absinkt. Die Suspension wird abgekühlt und für die weitere Reaktion bereitgehalten.
b) 100 g der gemäss a) erhaltenen Suspension werden auf 90°C erhitzt, dann werden 0,5 g triaminomodifiziertes Propyltrimethoxysilan (DYNASYLANOR® TRIAMO der Fa. Dynamit Nobel; 5 % Silan, bezogen auf das Pigment) zugegeben und es wird zwei Stunden bei dieser Temperatur weitergerührt. Nach dem Abkühlen wird das Produkt abfiltriert, mit Wasser gewaschen und in einem Vakuumtrockenschrank bei 120°C getrocknet.

Beispiel 2: 100 g der gemäss Beispiel 1a) erhaltenen Suspension werden filtriert, der Rückstand wird mit Wasser gewaschen, im Vakuumtrockenschrank bei 80°C getrocknet, danach mit 0,5 g Octadecyl-dimethyl-methoxysilan in einem Rotationsverdampfer eingefüllt und 3 Stunden bei 200°C behandelt. Das erhaltene Produkt wird mit 200 ml Xylol gewaschen, abfiltriert und der Rückstand wird zuerst mit Isopropanol, dann mit Wasser gewaschen und im Vakuumtrockenschrank bei 80°C getrocknet.

Beispiele 3-10: Beispiel 1 wird wiederholt mit der einzigen Ausnahme, dass anstelle des triaminomodifizierten Propyltrimethoxysilans jeweils die gleiche Menge des in Kolonne 2 der nachfolgenden Tabelle 1 angegebenen Silans eingesetzt wird.

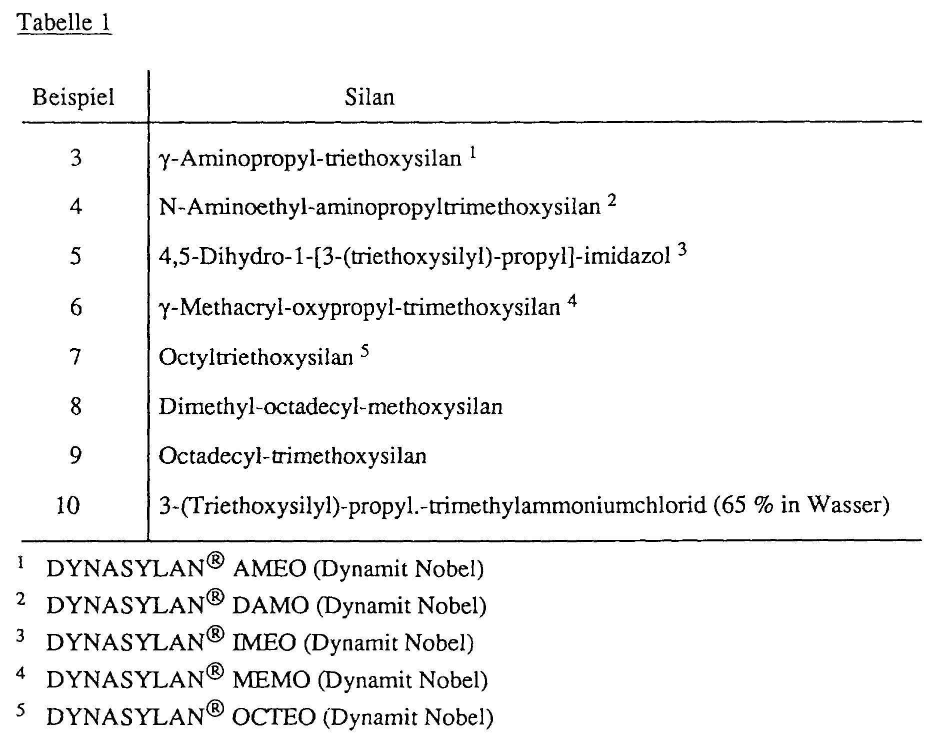

Beispiele 11-15: Beispiel 1 wird wiederholt mit der Ausnahme, dass anstelle von C.I. Pigment Rot 255 die gleiche Menge des in Kolonne 2 angegebenen Pigments, als Silan die gleiche Menge des in Kolonne 3 angegebenen Silans und die in Kolonne 4 der nachstehenden Tabelle 2 angegebene, als Oxid berechnete Menge Zirkoniumacetylacetonat eingesetzt wird.

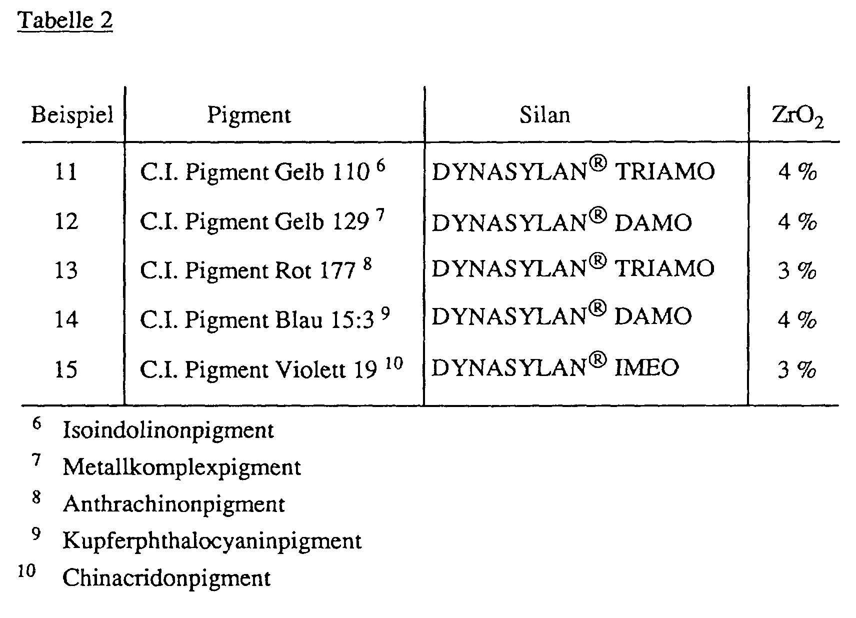

Beispiele 16-19: Beispiel 1 wird wiederholt mit der Ausnahme, dass anstelle von C.I. Pigment Rot 255 die gleiche Menge des orangen Pigments 1,4-Diketo-3,6-bis(4-tert.-butylphenyl)-pyrrolo[3,4-c]pyrrol und als Silan jeweils das in Kolonne 2 der nachfolgenden Tabelle 3 angegebene Silan in der in Beispiel 1 für das Silan angegebenen Menge eingesetzt werden.

**Tabelle 3**

| Beispiel | Silan |
|---|---|
| 16 | DYNASYLAN® AMEO |
| 17 | DYNASYLAN® DAMO |
| 18 | DYNASYLAN® TRIAMO |
| 19 | Dimethylaminopropyl-trimethoxysilan |

Beispiel 20: 20 g C.I. Pigment Rot 255 werden in 200 g Isopropylalkohol dispergiert. Zur Dispersion werden 2,75 g Titan-IV-diacetylacetonat-diisopropylat gegeben. Nach einer Stunde Rühren werden noch 10 ml einer 2%igen Lösung von Na-Isopropylat in Isopropylalkohol zugegeben. Die Suspension wird danach auf 75°C erhitzt und 3 Stunden weitergerührt. Nach dem Abkühlen werden 300 ml Wasser hinzugefügt, dann wird die Suspension auf Rückflusstemperatur erhitzt, 1 g triaminomodifiziertes Propyltrimethoxysilan (DYNASYLAN® TRIAMO) zugegeben und 2 Stunden unter Rückfluss weitergerührt. Nach dem Abkühlen wird das Produkt abfiltriert, mit Wasser gewaschen und im Vakuumtrockenschrank bei 120°C getrocknet.

Beispiel 21: Beispiel 20 wird wiederholt mit der Ausnahme, dass anstelle von Titan-IV-diacetylacetonat-diisopropylat, 2,5 g Titan-IV-isobutylat eingesetzt werden.

Beispiel 22: 2 g des gemäss Beispiel 1b) erhaltenen Produktes und 48 g Einbrennlack bestehend aus

| | |
|---|---|
| 56 g | Alkydharz ALKYDAL® F310 (Bayer AG; 60 %ig in Xylol) |
| 13 g | Melaminharz CYMEL® 327 (Cyanamid; 90 %ig in Butanol) |
| 25 g | Xylol |
| 25 g | Butanol |
| 2,5 g | 1-Methoxy-2-Propanol und |
| 1 g | Silikonöl (1 %ig in Xylol) |

werden nach üblichen Methoden vermischt. Die Applikation des erhaltenen Farblackes erfolgt durch Ablauf auf Glasplatte. Vor dem Einbrennen im Umluftrockenschrank (30 Minuten bei 120°C) lässt man ca. 30 Minuten bei 25° Neigung abluften.

Die Glanzwerte werden mit einem Glanzmesser (Zehntner ZGM 1020®) in 20° Neigung gemäss DIN 67 530 gemessen.

Die so erhaltene Lackierung ergibt im Vergleich zu einer Lackierung mit einem unbeschichteten Pigment einen um etwa 20 % besseren Glanz.

Beim jeweiligen Ersazt des Produktes von Beispiel 1b) mit den Produkten der Beispiele 2-10 erhält man etwa gleichwertige Resultate mit einer Verbesserung des Glanzes gegenüber Lackierungen mit unbeschichtetem Pigment von ca. 20-30 %.

Beispiel 23: Zur Bestimmung des Fliessverhaltens werden die Produkte der Beispiele 1-21 sowie die entsprechenden unbehandelten Pigmente nach üblichen Methoden in ein Alkyd-Lacksystem (SETAL® 84, Kunstharzfabrick Synthesis BV, Holland; Festkörpergehalt 70 %) eingearbeitet.

Das Fliessverhalten der Lackanreibungen, welche 12 % Pigment und 42 % Gesamtfestkörper enthalten und deren Pigment/Bindemittel-Verhältnis 0,3 beträgt, wird mit einem HAAKE-Viskosimeter ROTOVISCO® RV12 ermittelt (Messtemperatur: 25°C; Messsystem: SV-SP; Scherbereich: D = 0-100 [1/s]).

Die mit den Produkten der Beispiele 1-21 erhaltenen Lackanreibungen zeigen gegenüber den mit unbehandelten Pigmenten erhaltenen Lackanreibungen ein ca. 50-70 % besseres Fliessverhalten (Viskositätswerte).

Beispiele 24: Beispiel 22 wird wiederholt mit der Ausnahme, dass anstelle von 2 g des Produktes von Beispiel 1b) 1,5 g des Produktes von Beispiel 1a) verwendet wird und 0,5 g DYNASYLAN® TRIAMO direkt in den Lack zugegeben wird. Man erhält gleichwertige Ergebnisse.

Beispiel 25: Beispiel 1b) wird wiederholt mit der Ausnahme, dass anstelle von DYNASYLAN® TRIAMO die gleiche Menge an prehydrolysiertem Dodecyl-trichlorosilan verwendet wird.

## Patentansprüche

1. Stoffzusammensetzungen enthaltend
a) ein hochmolekulares organisches Material in Form eines Lackes oder einer Druckfarbe.
b) eine Pigmentzusammensetzung bestehend aus einem organischen Pigment, dessen Teilchenoberfläche mit einem festhaftenden Überzug aus Kieselsäurealkylester versehen ist, welcher durch Adsorption eines Kieselsäurealkylesters auf einer die Teilchenoberfläche umhüllenden Schicht fixiert wird, die im wesentlichen aus partiell hydrolysierten organischen Verbindungen von Elementen der Gruppe 4A oder 4B des Periodensystems, ausgewählt aus der Gruppe bestehend aus Chelaten der Formel 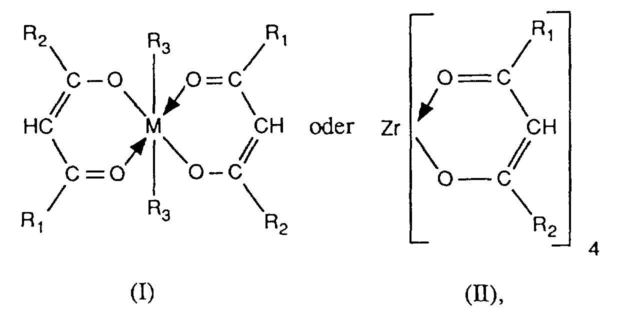 worin R₁ Methyl, Ethyl, Methoxy oder Ethoxy, R₂ Methyl oder Ethyl und R₃ Halogen oder C₁-C₄-Alkoxy sind und M Ti oder Sn bedeutet, und aus Estern der Formel
M₁(OR₄)₄ (III),
worin M₁ ein Element der Gruppe 4A oder 4B des Periodensystems und R₄ C₁-C₄-Alkyl bedeuten, besteht, wobei der Kieselsäurealkylester vor, während oder nach der Adsorption hydrolysiert wird.

2. Stoffzusammensetzungen gemäss Anspruch 1, dadurch gekennzeichnet, dass ein Kieselsäurealkylester der Formel 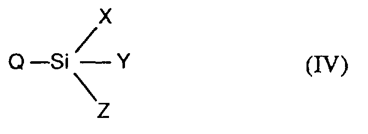 verwendet wird, worin
X OR oder Cl, Y und Z, unabhängig voneinander, OR, Cl oder Methyl und R Methyl oder Ethyl bedeuten und Q eine Gruppe 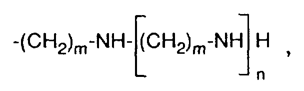 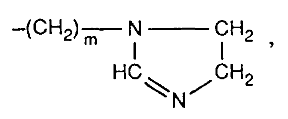
-(CH₂)ₘ-SH ,
-(CH₂)ₘ-Cl , 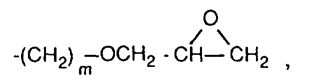
-(CH₂)ₘ-OCO-C(CH₃)=CH₂,
-CH=CH₂,
-(CH₂)ₘ-N(CH₃)₂ , 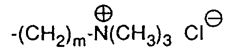
oder
-(CH₂)ₚ-CH₃
ist, worin m eine Zahl von 1 bis 6, n die Zahlen Null, 1 oder 2 und p eine Zahl von 6 bis 20 bedeuten.

3. Stoffzusammensetzungen gemäss Anspruch 1, dadurch gekennzeichnet, dass ein Kieselsäurealkylester der Formel 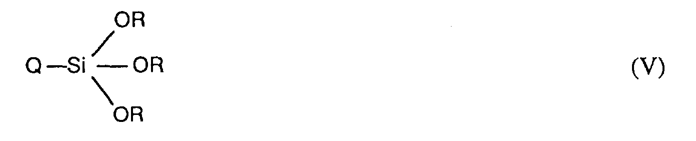 verwendet wird, worin R Methyl oder Ethyl ist und Q eine Gruppe 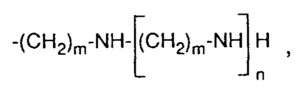 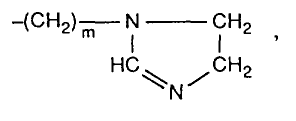
-(CH₂)ₘ-N(CH₃)₂
oder 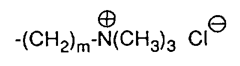 bedeutet, und m eine Zahl von 1 bis 3 ist und n Null, 1 oder 2 bedeutet.

4. Stoffzusammensetzungen gemäss Anspruch 3, dadurch gekennzeichnet, dass ein Kieselsäurealkylester der Formel V der in Anspruch 3 angegebenen Bedeutung, worin m die Zahl 3 ist, verwendet wird.

5. Stoffzusammensetzungen gemäss Anspruch 1, dadurch gekennzeichnet, dass in den Chelaten der Formeln I und II R₁ Methyl oder Ethoxy und R₂ Methyl bedeuten.

6. Stoffzusammensetzungen gemäss Anspruch 1, dadurch gekennzeichnet, dass in den Chelaten der Formel I M Ti und R₃ C₁-C₄-Alkoxy bedeuten.

7. Stoffzusammensetzungen gemäss Anspruch 1, dadurch gekennzeichnet, dass in den Chelaten der Formel I M Sn und R₃ Chlor bedeuten.

8. Stoffzusammensetzungen gemäss Anspruch 1, dadurch gekennzeichnet, dass in den Estern der Formel III M₁ Si, Ti oder Zr und R₄ Ethyl, n-Propyl, Isopropyl oder n-Butyl bedeuten.

9. Stoffzusammensetzungen gemäss Anspruch 1, dadurch gekennzeichnet, dass die Verbindung der Formel I, II oder III in einer Menge von 1 bis 15 Gew.%, jeweils als Oxid berechnet, bezogen auf das Pigment, eingesetzt wird.

10. Stoffzusammensetzungen gemäss Anspruch 1, dadurch gekennzeichnet, dass der Kieselsäurealkylester in einer Menge von 0,5 bis 50 Gew.%, bezogen auf das Pigment, eingesetzt wird.

11. Stoffzusammensetzungen gemäss Anspruch 1, dadurch gekennzeichnet, dass ein organisches Pigment ausgewählt aus der Gruppe bestehend aus Diketopyrrolopyrrole, Azopigmente, Chinacridone, Chinophthalone, Phthalocyanine, Indanthrone, Flavanthrone, Pyranthrone, Anthrachinone, Perylene, Dioxazine, Perinone, Thioindigo, Isoindoline, Isoindolinone und Metallkomplexe eingesetzt wird.

12. Stoffzusammensetzungen gemäss Anspruch 11, dadurch gekennzeichnet, dass ein Pigment ausgewählt aus der Gruppe bestehend aus Diketopyrrolopyrrole, Azopigmente, Chinacridone, Phthalocyanine, Isoindoline und Isoindolinone eingesetzt wird.

13. Stoffzusammensetzungen gemäss Anspruch 11, dadurch gekennzeichnet, dass ein Diketopyrrolopyrrolpigment eingesetzt wird.

14. Stoffzusammensetzungen gemäss Anspruch 1, dadurch gekennzeichnet, dass es sich beim hochmolekularen organischen Material um einen Lack handelt.

15. Stoffzusammensetzungen gemäss Anspruch 14, dadurch gekennzeichnet, dass es sich beim Lack um einen Automobillack handelt.

16. Pigmentzusammensetzungen enthaltend ein mit einem Kieselsäurealkylester beschichtetes organisches Pigment, dadurch gekennzeichnet, dass die Teilchenoberfläche des Pigments mit einem festhaftenden Überzug aus Kieselsäurealkylester versehen ist, welcher durch Adsorption eines Kieselsäurealkylester der Formel 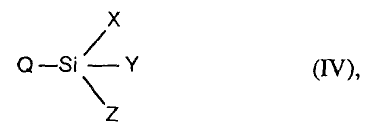 worin
X OR oder Cl, Y und Z, unabhängig voneinander, OR, Cl oder Methyl und R Methyl oder Ethyl bedeuten und Q eine Gruppe 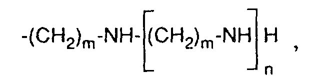 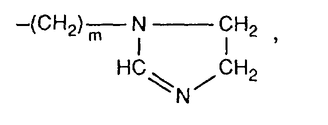
-(CH₂)ₘ-SH ,
-(CH₂)ₘ-Cl , 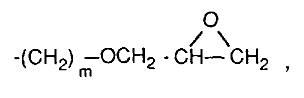
-CH=CH₂ ,
-(CH₂)ₘ-N(CH₃)₂ , 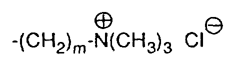
oder
-(CH₂)ₚ-CH₃
ist, worin m eine Zahl von 1 bis 6, n die Zahlen Null, 1 oder 2 und p eine Zahl von 6 bis 20 bedeuten,
auf einer die Teilchenoberfläche umhüllenden Schicht fixiert wird, die im wesentlichen aus partiell hydrolysierten organischen Verbindungen von Elementen der Gruppe 4A oder 4B des Periodensystems, ausgewählt aus der Gruppe bestehend aus Chelaten der Formel 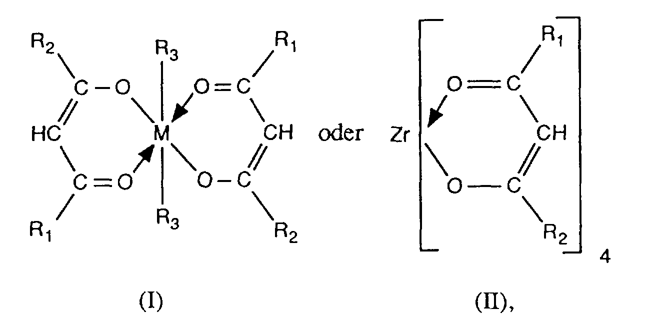 worin R₁ Methyl, Ethyl, Methoxy oder Ethoxy, R₂ Methyl oder Ethyl und R₃ Halogen oder C₁-C₄-Alkoxy sind und M Ti oder Sn bedeutet, und aus Estern der Formel
M₁(OR₄)₄ (III),
worin M₁ ein Element der Gruppe 4A oder 4B des Periodensystems und R₄ C₁-C₄-Alkyl bedeuten, besteht, wobei der Kieselsäurealkylester vor, während oder nach der Adsorption hydrolysiert wird.

17. Mit einer Stoffzusammensetzung gemäss Anspruch 16 pigmentierte Kunststoffe ausgewählt aus der Gruppe bestehend aus Harnstoff- und Melamin-Formaldehydharzen, Alkydharzen, Phenoplasten, Polycarbonaten, Polyolefinen, Polystyrol, Polyvinylchlorid, Polyamiden, Polyurethanen, Polyestern, Gummi, Casein, Silikon und Silikonharzen, einzeln oder in Mischungen.

## Claims

1. A composition comprising
a) an organic material of high molecular weight in the form of a coating material or of a printing ink,
b) a pigment composition comprising an organic pigment whose particle surface is provided with a tenacious coating of alkyl silicate, said coating being fixed by adsorption of an alkyl silicate on a layer that envelops the particle surface and consists essentially of partially hydrolysed organic compounds of elements of group 4A or 4B of the Periodic Table, selected from the group consisting of chelates of formula 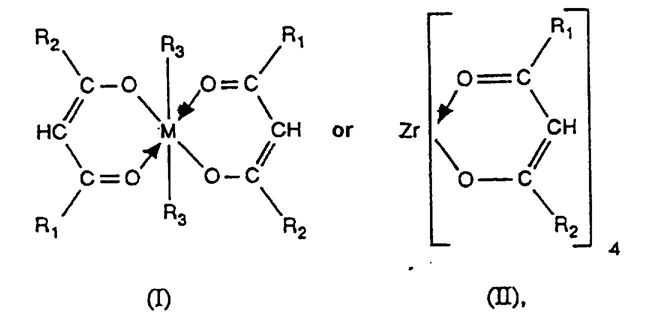 wherein R₁ is methyl, ethyl, methoxy or ethoxy, R₂ is methyl or ethyl and R₃ is halogen or C₁-C₄alkoxy, and M is Ti or Sn, and of esters of formula
M₁(OR₄)₄ (III),
wherein M₁ is an element of group 4A or 4B of the Periodic Table and R₄ is C₁-C₄alkyl, which alkyl silicate is hydrolysed before, during or after adsorption.

2. A composition according to claim 1, wherein an alkyl silicate of formula 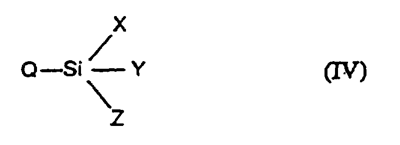 is used in which
X is OR or Cl, Y and Z, each independently of the other, are OR, Cl or methyl or ethyl, and Q is a group 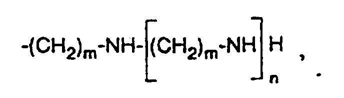 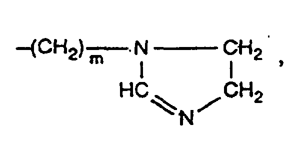
-(CH₂)ₘ-SH ,
-(CH₂)ₘ-Cl , 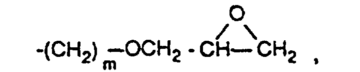
-(CH₂)ₘ-OCO-C(CH₃)=CH₂ ,
-CH=CH₂ ,
-(CH₂)ₘ-N(CH₃)₂ , 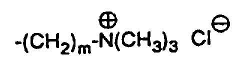
or
-(CH₂)ₚ-CH₃
wherein m is from 1 to 6, n is zero, 1 or 2, and p is from 6 to 20.

3. A composition according to claim 1, wherein an alkyl silicate of formula 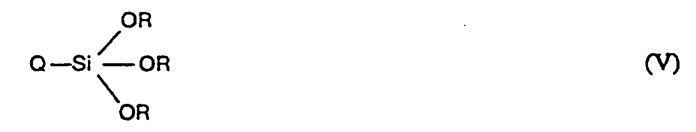 is used in which R is methyl or ethyl and Q is a group 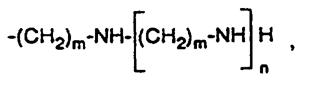 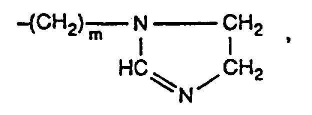
-(CH₂)ₘ-N(CH₃)₂
or 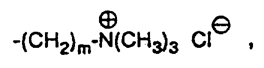 m is from 1 to 3 and n is zero, 1 or 2.

4. A composition according to claim 3, wherein an alkyl silicate of formula V as defined in claim 3 is used in which m is 3.

5. A composition according to claim 1, wherein in the chelates of formulae I and II R₁ is methyl or ethoxy and R₂ is methyl.

6. A composition according to claim 1, wherein in the chelates of formula I M is Ti and R₃ is C₁-C₄alkoxy,

7. A composition according to claim 1, wherein in the chelates of formula I M is Sn and R₃ is chloro.

8. A composition according to claim 1, wherein in the esters of formula III M₁ is Si, Te or Zr and R₄ is ethyl, n-propyl, isopropyl or n-butyl.

9. A composition according to claim 1, wherein the compound of formula I, II or III is employed in an amount of 1 to 15 % by weight, calculated in each case as oxide, based on the pigment.

10. A composition according to claim 1, wherein the alkyl silicate is employed in an amount of 0.5 to 50 % by weight, based on the pigment.

11. A composition according to claim 1, wherein an organic pigment selected from the group consisting of diketopyrrolopyrroles, azo pigments, quinacridones, quinophthalones, phthalocyanines, indanthrones, flavanthrones, pyranthrones, anthraquinones, perylenes, dioxazines, perinones, thioindigo, isoindolinones, isoindolinones and metal complexes is employed.

12. A composition according to claim 11, wherein an organic pigment selected from the group consisting of diketopyrrolopyrroles, azo pigments, quinacridones, phthalocyanines, isoindolines and isoindolinones is employed.

13. A composition according to claim 11, wherein a diketopyrrolopyrrole pigment is employed.

14. A composition according to claim 1, wherein the organic material of high molecular weight is a coating material.

15. A composition according to claim 14, wherein the coating material is an automotive coating material.

16. A pigment composition comprising an organic pigment coated with an alkyl silicate, wherein the particle surface of the pigment is provided with a tenacious coating of alkyl silicate, said coating being fixed by adsorption of an alkyl silicate of formula 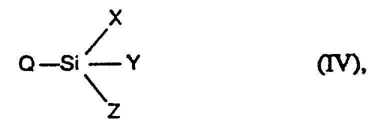 wherein
X is OR or Cl, Y and Z are each independently of the other OR, Cl or methyl and R is methyl or ethyl, and Q is a group 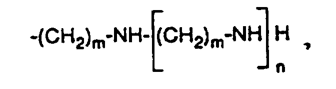 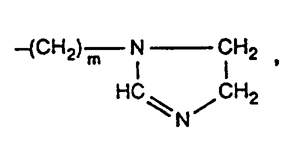
-(CH₂)ₘ-SH ,
-(CH₂)ₘ-Cl , 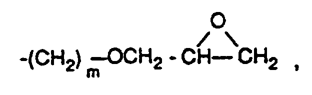
-CH=CH₂ ,
-(CH₂)ₘ-N(CH₃)₂ , 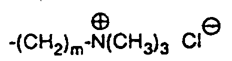
or
-(CH₂)ₚ-CH₃
wherein m is from 1 to 6, n is zero, 1 or 2, and p is from 6 to 20, on a layer that envelops the particle surface and consists essentially of partially hydrolysed organic compounds of elements of group 4A or 4B of the Periodic Table, selected from the group consisting of chelates of formula 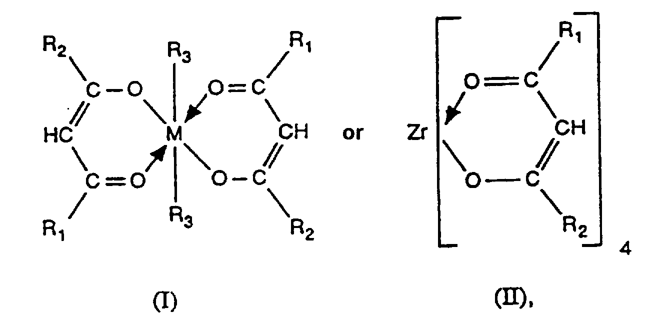 wherein R₁ is methyl, ethyl, methoxy or ethoxy, R₂ is methyl or ethyl and R₃ is halogen or C₁-C₄alkoxy, and M is Ti or Sn, and of esters of formula
M₁(OR₄)₄ (III),
wherein M₁ is an element of group 4A or 4B of the Periodic Table and R₄ is C₁-C₄alkyl, which alkyl silicate is hydrolysed before, during or after adsorption.

17. A plastic selected from the group consisting of urea/formaldehyde and melamine/formaldehyde resins, alkyd resins, phenolic resins, polycarbonates, polyolefins, polystyrene, polyvinyl chloride, polyamides, polyurethanes, polyesters, rubber, casein, silicone and silicone resins, singly or in mixtures, which material is pigmented with a composition according to claim 16.

## Revendications

1. Compositions de matières contenant :
a) une matière organique de haut poids moléculaire sous forme d'un vernis ou d'une encre d'imprimerie ;
b) une composition pigmentaire constituée d'un pigment organique dont la surface des particules est pourvue d'un revêtement solidement adhérent d'ester d'alkyle d'acide silicique que l'on fixe par adsorption d'un ester d'alkyle d'acide silicique sur une couche enveloppant la surface de la particule, laquelle couche se compose essentiellement de composés organiques partiellement hydrolysés des éléments du groupe 4A ou 4B du Tableau Périodique des Eléments, pris dans le groupe comportant des chélates de formule 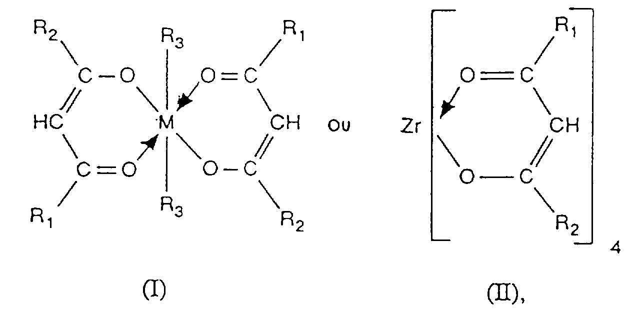 dans lesquelles R₁ représente méthyle, éthyle, méthoxy ou éthoxy, R₂ représente méthyle ou éthyle, et R₃ représente halogène ou alcoxy en C₁-C₄ et M représente Ti ou Sn et d'esters de formule
M₁(OR₄)₄ (III),
dans laquelle M₁ représente un élément du groupe 4A ou 4B du Tableau Périodique des Eléments et R₄ représente alkyle en C₁-C₄, l'ester d'alkyle d'acide silicique étant hydrolysé avant, pendant ou après l'adsorption.

2. Compositions de matières selon le revendication 1 caractérisées en ce qu'on utilise un ester d'alkyle d'acide silicique de formule 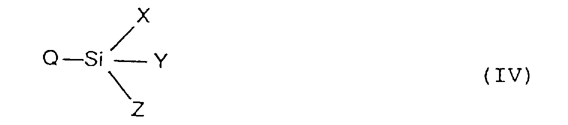 dans laquelle
X représente OR ou Cl, Y et Z, indépendamment l'un de l'autre, représentent OR, Cl ou méthyle, et R représente méthyle ou éthyle et Q représente un groupe 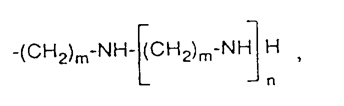 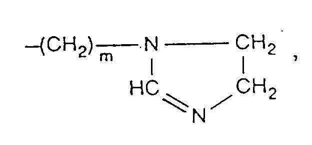
-(CH₂)ₘ-SH ,
-(CH₂)ₘ-Cl , 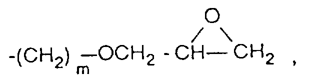
-(CH₂)ₘ-OCO-C(CH₃)=CH₂ ,
-CH=CH₂ ,
-(CH₂)ₘ-N(CH₃)₂, 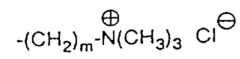
ou
-(CH₂)ₚ-CH₃
où m va de 1 à 6, n vaut 0, 1 ou 2 et p va de 6 à 20.

3. Compositions de matières selon la revendication 1, caractérisées en ce qu'on utilise un ester d'alkyle d'acide silicique de formule 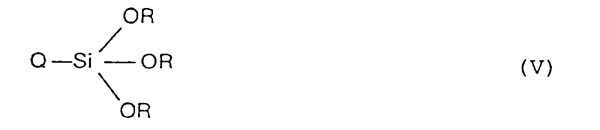 dans laquelle R représente méthyle ou éthyle et Q représente un groupe 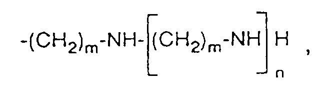 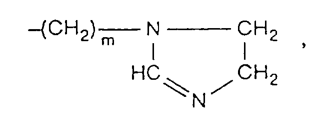
-(CH₂)ₘ-N(CH₃)₂
ou 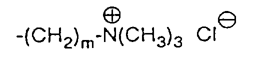 m va de 1 à 3 et n vaut 0, 1 ou 2.

4. Compositions de matières selon la revendication 3, caractérisées en ce qu'on utilise un ester d'alkyle d'acide silicique de formule V ayant la signification indiquée dans la revendication 3, où m vaut 3.

5. Compositions de matières selon la revendication 1, caractérisées en ce que, dans les chélates de formules I et II, R₁ représente méthyle ou méthoxy et R₂ représente méthyle.

6. Compositions de matières selon la revendication 1, caractérisées en ce que, dans les chélates de formule I, M représente Ti et R₃ représente alcoxy en C₁-C₄.

7. Compositions de matières selon la revendication 1, caractérisées en ce que, dans les chélates de formule I, M représente Sn et R₃ représente le chlore.

8. Compositions de matières selon la revendication 1, caractérisées en ce que, dans les esters de formule III, M₁ représente Si, Ti ou Zr et R₄ représente éthyle, n-propyle, isopropyle ou n-butyle.

9. Compositions de matières selon la revendication 1, caractérisées en ce qu'on utilise le composé de formule I, II ou III dans une quantité de 1 à 15 % en poids, calculée chaque fois sous forme d'oxyde, par rapport au pigment.

10. Compositions de matières selon la revendication 1, caractérisées en ce qu'on utilise l'ester d'alkyle d'acide silicique dans une quantité de 0,5 à 50 % en poids par rapport au pigment.

11. Compositions de matières selon la revendication 1, caractérisées en ce qu'on utilise un pigment organique pris dans le groupe comportant des dicétopyrrolopyrroles, des pigments azoïques, des quinacridones, des quinophtalones, des phtalocyanines, des indanthrones, des flavanthrones, des pyranthrones, des anthraquinones, des pérylènes, des dioxazines, des périnones, le thioindigo, des isoindolines, des isoindolinones et des complexes de métaux.

12. Compositions de matières selon la revendication 11, caractérisées en ce qu'on utilise un pigment pris dans le groupe comportant des dicétopyrrolopyrroles, des pigments azoïques, des quinacridones, des phtalocyanines, des isoindolines et des isoindolinones.

13. Compositions de matières selon la revendication 11, caractérisées en ce qu'on utilise un pigment de dicétopyrrolopyrrole.

14. Compositions de matières selon la revendication 1, caractérisées en ce qu'il s'agit dans le cas de matières organiques de haut poids moléculaire d'un vernis.

15. Compositions de matières selon la revendication 14, caractérisées en ce que, dans le cas du vernis, il s'agit d'un vernis pour automobile.

16. Compositions pigmentaires contenant un pigment organique revêtu d'un ester d'alkyle d'acide silicique caractérisées en ce que la surface des particules du pigment est pourvue d'un revêtement solidement adhérent d'un ester d'alkyle d'acide silicique, fixé par adsorption d'un ester d'alkyle d'acide silicique de formule 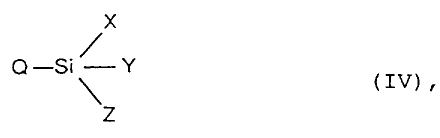 dans laquelle
X représente OR ou Cl, Y et Z, indépendamment l'un de l'autre, représentent OR, Cl ou méthyle, et R représente méthyle ou éthyle et Q représente un groupe 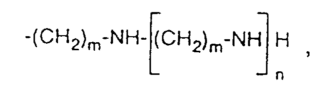 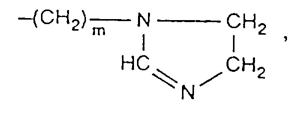
-(CH₂)ₘ-SH ,
-(CH₂)ₘ-Cl , 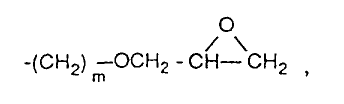
-CH=CH₂ ,
-(CH₂)ₘ-N(CH₃)₂ , 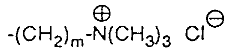
ou
-(CH₂)ₚ-CH₃
dans lesquelles m va de 1 à 6, n vaut 0, 1 ou 2 et p va de 6 à 20,
est fixé sur la couche enveloppant la surface des particules, laquelle couche est constituée essentiellement de composés organiques partiellement hydrolysés des éléments du groupe 4A ou 4B du Tableau Périodique des Eléments pris dans le groupe composé.des chélates de formule 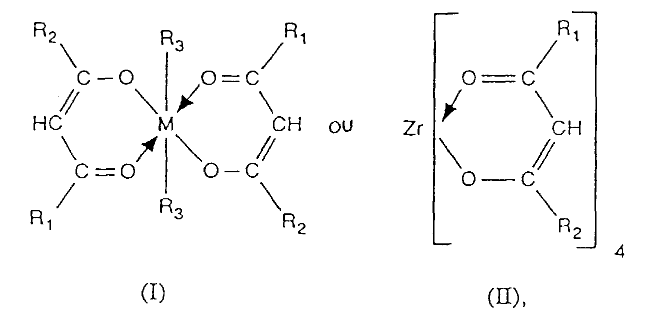 dans lesquelles R₁ représente méthyle, éthyle, méthoxy ou éthoxy, R₂ représente méthyle ou éthyle, et R₃ représente halogène ou alcoxy en C₁-C₄ et M représente Ti ou Sn et d'esters de formule
M₁(OR₄)₄ (III),
dans laquelle M₁ représente un élément du groupe 4A ou 4B du Tableau Périodique des Eléments et R₄ représente alkyle en C₁-C₄, l'ester d'alkyle d'acide silicique pouvant être hydrolysé avant, pendant ou après l'adsorption.

17. Matières synthétiques pigmentées à l'aide d'une composition de matières selon la revendication 16, prises dans le groupe comportant les résines d'urée- et de mélamin-formaldéhyde, les résines alkydes, les phénoplastes, les polycarbonates, les polyoléfines, le polystyrène, le poly(chlorure de vinyle), les polyamides, les polyuréthannes, les polyesters, le caoutchouc, la caséine, les silicones et les résines silicone, seuls ou en mélanges.
